# EUROPEAN PATENT SPECIFICATION

(11) **EP 3 418 032 B1**
(45) Date of publication and mention of the grant of the patent: **24.02.2021**
(21) Application number: 17177751.9
(22) Date of filing: 24.06.2017
(51) Int. Cl.: B29C 64/118, B29C 65/16, B29C 64/268, B33Y 10/00, B33Y 30/00

(54) **METHOD AND DEVICE FOR ADDITIVE MANUFACTURING**
VERFAHREN UND VORRICHTUNG FÜR EIN ADDITIVES HERSTELLUNGSVERFAHREN
PROCÉDÉ ET DISPOSITIF DE FABRICATION ADDITIVE

(43) Date of publication of application: 26.12.2018
(73) Proprietor: Sintratec AG, 5200 Brugg (CH)
(72) Inventor: VON BURG, Christian, 9052 Niederteufen (CH); SOLENICKI, Dominik, 5200 Brugg (CH)
(74) Representative: Herrmann, Johanna

(56) References cited:
- WO-A1-2015/147939
- WO-A1-2015/147939
- WO-A2-2015/193819
- WO-A2-2015/193819
- US-A1- 2014 079 841
- US-A1- 2014 079 841

## Description

The invention relates to a method and a device for additive manufacturing. Such a method and the corresponding device can be used for the processing of polymeric material in an additive manufacturing method.

Additive manufacturing methods and corresponding devices have been in use for a number of years. In particular, fused deposition manufacturing (FDM) is a commonly used method for modeling prototyping and production applications which are commercialized by the company Stratasys Inc. Stratasys commercializes 3D printers that make use of FDM technology to build parts layer-by-layer from the bottom up by heating and extruding a thermoplastic filament layer-by-layer. From an image source, e.g. a 3D CAD file, a build-preparation software slices and positions the 3D CAD file and calculates a path to extrude the thermoplastic material and any necessary support material. The thermoplastic material is extruded to form a filament, which can be positioned layerwise on a base element. The device comprises a 3D printer head which contains a heating element to heat the thermoplastic material to a semi-liquid state so as to form a flowable thermoplastic material. The flowable thermoplastic material leaves the printer head through a nozzle where it is deposited in ultra-fine beads along the extrusion path on the base element. Depending on the shape of the 3D article to be generated by the additive manufacturing method a support or buffering may be required. The 3D printer can deposit a removable support material that acts as scaffolding to support the 3D article which may be subject to tilting if left unsupported in space. The support material may be removed after completion of the 3D article either by mechanically removing the support material or dissolving it in detergent and water.

Due to the fact, that the flowable thermoplastic material cools rapidly after having left the printer head, the filament, which is deposited onto a previously deposited filament layer may not bond well to the previously deposited filament layer. The previously deposited filament layer may have cooled and therefore the flowable filament is deposited on a surface of a filament which is already hardened. The hot filament is not capable of softening the previously deposited filament layer anymore, therefore the interconnection of two neighboring layers may not exhibit the same strength as a thermoplastic article obtained from by a single manufacturing step, e.g. by injection molding. For this reason, an inferior strength is to be expected from a polymeric article manufactured by FFF (fused filament fabrication).

Therefore, there is a need of increasing the strength of a solid polymeric article manufactured by an additive manufacturing method.

It is known, e.g. from DE 10243005 A1, to weld thermoplastic materials by making use of a laser beam. The laser beam is disposed with a wave length suitable for welding, that means a wave length which can be absorbed by the thermoplastic material. In particular, this technique can be used to weld two different thermoplastic materials. One of these materials is transmissive to the laser beam whereas the other absorbs the energy of the laser beam. The laser absorbing thermoplastic material can therefore be heated by the laser beam.

This method works well, if the article is configured as a laminate consisting of two layers of thermoplastic material, in particular thermoplastic material of a planar shape. The heat generation in the heat absorbing thermoplastic material and the subsequent transfer from the heat absorbing thermoplastic material to the heat transmissive surface is therefore predictable. This condition is not necessarily fulfilled for a filament of roughly circular cross-section, thus any other cross-section than a sheet. The use of a light beam for measuring the flow rate of an extrudate from a print head has been disclosed in WO2014/149312. A light beam is directed towards the molten material, which causes the light beam to scatter. At least a portion of the scattered light is detected by a detector which converts the detected scattered light into electrical signals indicative of the flow rates which are received by a controller assembly.

The scattering effect is caused by the cylindrical shape of the filament, which shows, that already the impact of an energy beam onto such a surface doesn't lead to an impact point but a scattered impact surface, which makes it difficult if not impossible to direct the energy beam to perform a transformation into the flowable state precisely along the line of contact between neighboring filaments.

A drawback of the known method is the fact that the bonding between neighboring layers may be insufficient in particular if the solid polymer article is subjected to substantial tensile stress.

WO2015/147939 A1 discloses a technique for incorporating microwave absorbing nanomaterials (carbon nanotubes (CNTs)) onto the surface or throughout the volume of a 3D printer polymer filament to increase the inter-bead bond strength following a post microwave irradiation treatment and/or an in-situ focused microwave beam during printing. The result of the addition of nanomaterials are thus improved mechanical properties of the filament and the object manufactured therewith. The object can be subjected to a microwave heating, whereby a rapid diffusive bonding of polymer chains between adjacend bonds is obtained. It is also known from US20140079841 A1 to mix additives or coloring inks to a polymer to be used as a filament for an FDM (fused deposition modeling) process.

It is thus an object of the invention to provide a device and a method for providing a solid polymer article of increased coherence and strength manufactured by an additive manufacturing method. In particular, it is an object of the invention to provide an additive manufacturing device and an additive manufacturing method for obtaining an article of increased strength.

The problem is solved by a method according to claim 1 and a device according to claim 8. Further advantageous embodiments of the method are subject to claims 2 to 7 and further advantageous embodiments of the device are subject to claims 9 to 15.

A method for manufacturing a solid article by an additive manufacturing device comprises a first step of depositing a filament on a base element. In a second step, the filament is at least partially covered by an energy absorbing layer. In a third step, the energy absorbing layer is at least partially covered by another layer of the filament, such that the energy absorbing layer is sandwiched between the filaments. In a fourth step, an energy beam is directed onto the energy absorbing layer to provide a bond of the filaments and the energy absorbing layer.

According to an embodiment, the energy absorbing layer is melted when in contact with the energy beam.

According to an embodiment, a pathway for depositing the filament on the base element is determined according to a computer-generated model of the solid article by a control unit. In particular, the pathway for depositing the filament on the base element can be obtained by entering coordinate data corresponding to the surface of the model of the solid article to a processing unit. The processing unit calculates the pathway for the supply of the filament and the energy absorbing layer and stores it in a storage unit. The pathway can be stored also as pathway coordinate information in the storage unit. The pathway coordinate information stored in the storage unit can be accessed by the control unit to control the filament supply unit and the energy absorbing layer supply unit. In an embodiment, the control unit can comprise at least one of the processing unit and the storage unit. The control unit can be provided with a communication port for receiving the data corresponding supply unit and the energy absorbing layer supply unit may be operated by their own drive unit. An energy beam generation unit may be provided for generating the energy beam. The energy beam generation unit may be controlled by the control unit. The control unit may determine if an energy beam is to be emitted and to be directed onto the energy absorbing layer, the control unit may be configured adjust the direction of the emission of the energy beam. The control unit may be configured to adjust the power of the energy beam.

According to an embodiment, the filaments and the energy absorbing layer are bonded by welding. When the energy beam reaches the energy absorbing layer, the energy of the energy beam is transformed into heat, whereby the temperature of the energy absorbing layer is increased. The energy absorbing layer can melt and/or cause the filaments to melt at least partially such that at least a portion of the filament is melted. The molten energy absorbing layer and/or the molten portion of the filament are bonded. Thereby, the filaments and the energy absorbing layer form a stable connection which can be subjected to substantially the same tensile stress as the filament without formation of cracks or any other detachment of the filaments from each other or a detachment of the filaments from the intermediate energy absorbing layer.

According to an embodiment, a plurality of filaments is deposited on the base element in a stacked configuration. That means in particular, that a further energy absorbing layer and a further filament can be placed on top of the filament sandwich produced by the method. The further energy absorbing layer and the further filament can be subjected to an energy beam which is directed onto the energy absorbing layer to provide a bond of the filaments and the energy absorbing layer.

The method steps can be repeated to form the solid article. The solid article can be composed of a stack of two up to and including 10 filaments. Thereby a small sized and/or a substantially flat solid article can be produced. The solid article can be composed of a stack of two up to and including 100 filaments. Thereby a medium sized and/or a substantially flat solid article with some peaks or protrusions can be produced. The solid article can be composed of a stack of two up to and including 1000 filaments. Thereby a solid article of large size and/or substantial height can be produced.

An additive manufacturing device comprises a base element, a filament generation unit for generating a filament, a filament supply unit for supply of the filament, a raw material container containing a raw material to be supplied to the filament generation unit, an energy absorbing layer supply unit configured to supply an energy absorbing layer on the filament.

The filament generation unit is configured to transform the raw material into the filament. The filament is deposited by the filament supply unit on the base element. The energy absorbing layer supply unit is configured to supply the energy absorbing layer, such that the energy absorbing layer covers at least a portion of the deposited filament. An energy beam is directed onto the energy absorbing layer to heat the energy absorbing layer, such that the energy absorbing layer and the filaments are bonded.

By the bonding the mechanical strength of the solid article is increased. It is possible to manufacture a solid article of any shape. Even if the solid article comprises surfaces with are overhanging with respect to the base element, such overhanging surfaces may be produced without support, as the bonded filaments will not deform due to their increased strength once they are solidified.

According to an embodiment, the filament comprises a light transmissive material. The filament can have a diameter or a thickness of 0.05 mm up to and including 5 mm. According to an embodiment, the light transmissive material and/or the energy absorbing layer comprises a polymer. According to an embodiment, the energy absorbing layer is sandwiched between two filaments.

In particular, the filament and/or the energy absorbing layer can comprise a thermoplastic polymer.

According to an embodiment, an applicator element is provided for applying the energy absorbing layer on the filament. The applicator element can be configured as one of a spraying device, a roller element or a dispenser.

According to an embodiment, the energy absorbing layer comprises an energy absorbing ink. The energy absorbing layer can be applied as a powder, a liquid or a slurry. The powder, liquid or slurry may be sprayed on the surface of the filament. According to an embodiment, the energy absorbing layer comprises a foil.

The bonding between the filaments can be obtained by laser-welding. In particular, the energy beam can be a laser beam. According to an embodiment, the energy beam is a laser beam of the group comprising a CO₂ laser, an Ar-laser, a He-Ne-laser, a Kr-laser, a H₂-laser, a N₂-laser, an Excimer laser, a rubin laser, an Nd:YAG (neodyme-dotated yttrium-aluminum-Garnet laser), in particular with a characteristic wave length of 1064 nm and 532 nm, or a diode laser.

According to an embodiment, the device comprises a print head comprising the filament supply unit, the energy absorbing layer supply unit and the energy beam generation unit. If all of the filament supply units, the energy absorbing layer supply units and the energy beam generation units are arranged in a single print head, the conditions for application of the filament, the energy absorbing layer and the energy beam remain always the same if the flow rate of the filament, the flow rate of the energy absorbing layer and the transmission energy of the energy beam are kept constant. Thereby, a solid article of uniform mechanical characteristics can be obtained independently of the desired shape of the solid article.

The device according to one of the preceding embodiments can further comprise a control unit. The control unit can comprise or can be connected to a processing unit for obtaining a pathway for depositing the filament on the base element such that the moving filament supply unit, the energy absorbing layer supply unit and the energy beam generation unit are moveable according to the defined pathway.

The additive manufacturing device according to any of the preceding embodiments can be used for manufacturing a solid article, in particular a solid polymeric article.

The polymer can comprise at least one element of the group of polyurethane (PUR), polyethylene (PE), polypropylene (PP), polyoxymethylene (POM), polymethacrylate, polymethylmethacrylate (PMMA), polyamide, polyolefin, polystyrene, styrene co-polymer, polycarbonate, polysulfone, polyethersulfone, polyketone, polyimide, polyetherketone, polyetheretherketone (PEEK), polyphenylensulfide, polyester, polyethylene terephthalate (PET), polyethylene naphthalate (PEN), polybutylene terephthalate (PBT), polyethylene oxide, cyclic olefinic polymer, polymers containing fluor, such as polyvinylidene fluoride (PVDF), or polytetrafluoroethylene (PTFE), silicone, polylactide, thermoplastic elastomers.

The energy beam absorbing layer may comprise a polymer, e.g. one or more of the polymers mentioned previously and an absorbing additive, such as silicon dioxide, titanium dioxide, calcium carbonate, aluminum oxide, carbon black, color agents.

The polymer may comprise a laser-sensitive additive, such as indium oxide, tin oxide, indium-tin oxide or antimony-tin oxide or lanthanum hexaboride. In particular, the laser sensitive additive can comprise nano particles of at least one of the additives mentioned above. A nano particle is characterized by a particle size of less than 1 micrometer. In particular, the particle size of the nano particle can be 1 up to and including 500 nanometers. The nanoparticles can comprise about 0.0001 to 0.1 weight percent of the polymer. The polymer can contain borides to improve laser welding capability.

If the term «for instance» is used in the following description, the term relates to embodiments or examples, which is not to construed as a more preferred application of the teaching of the invention. The terms "preferably" or "preferred" are to be understood such that they relate to an example from a number of embodiments and/or examples which is not to construed as a more preferred application of the teaching of the invention. Accordingly, the terms "for example", "preferably" or "preferred" may relate to a plurality of embodiments and/or examples.

The subsequent detailed description contains different embodiments of the device according to the invention. The device can be manufactured in different sizes making use of different materials, such that the reference to a specific size or a specific material is to be considered to be merely exemplary. In the description, the terms «contain», «comprise», «are configured as» in relation to any technical feature are thus to be understood that they contain the respective feature, but are not limited to embodiments containing only this respective feature.

A number of embodiments are shown in the subsequent drawings.
Fig. 1 shows a sequence of method steps for carrying out the invention,
Fig. 2 a device according to an embodiment of the invention,
Fig. 3 a detail of a solid article manufactured by a device according to the invention.

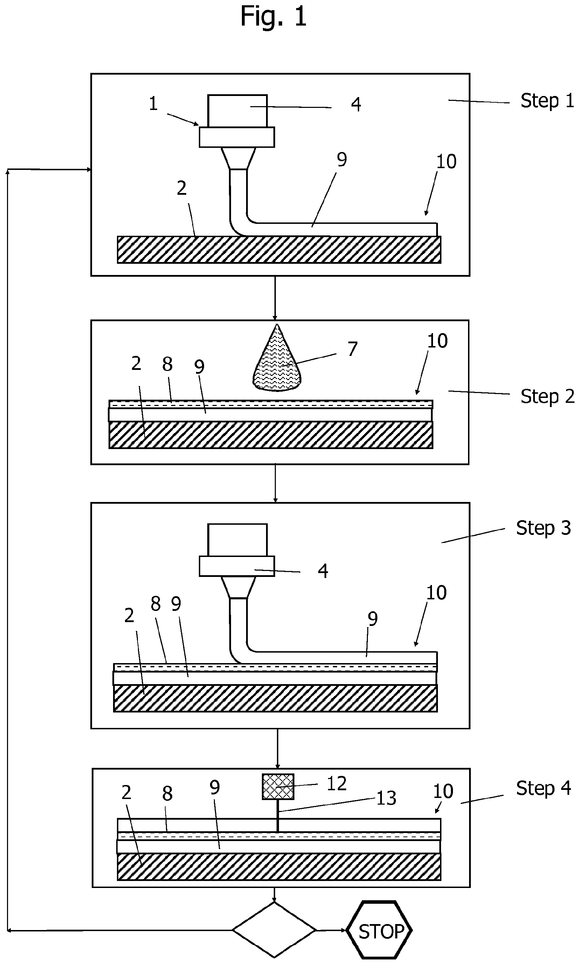

Fig. 1 shows the principal method steps of a method for manufacturing a solid article 10 by an additive manufacturing device 1. The method comprises a first step of depositing a filament 9 on a base element 2. The filament 9 is supplied by a filament supply unit 4, which is movable in a direction substantially parallel to the surface of the base element 2.

In a second step, the filament 9 is at least partially covered by an energy absorbing layer 8. The energy absorbing layer 8 can be supplied to the filament 9 by an energy absorbing layer supply unit 7. The energy absorbing layer 8 can cover the filament 9 entirely or partially, which is not shown in the drawing.

In a third step the energy absorbing layer 8 is at least partially covered by another layer of the filament 9, such that the energy absorbing layer 8 is sandwiched between the filaments 9. The filament 9 is supplied by a filament supply unit 4, which is movable in a direction substantially parallel to the surface of the base element 2 and the filament 9 already deposited on the surface of base element 2. The solid article 10 is thereby generated layer by layer.

In a fourth step, an energy beam 13 is directed onto the energy absorbing layer 8 to provide a bond of the filaments 9 and the energy absorbing layer 8. An energy beam generation unit 12 can be moved substantially parallel to the filament. In particular, the energy absorbing layer 8 can be melted when in contact with the energy beam 13.

A pathway for depositing the filament 9 on the base element 2 is determined according to a computer-generated model of the solid article 10 by a control unit 11. The pathway for depositing the filament 9 on the base element 2 can be calculated by a processing unit with the data of the computer-generated model. The coordinate data representing the pathway can be stored in a storage unit. The coordinate data can be retrieved from the storage unit by a retrieval unit and transformed by the control unit 11 into commands which move a filament supply unit 4 according to the instructions provided by the data from the storage unit. The energy absorbing layer supply unit 7 can be controlled by the control unit 11. In particular, the energy absorbing layer supply unit 7 can be moved along the same pathway as the filament supply unit 4.

According to a preferred embodiment, the filaments 9 and the energy absorbing layer 8 are bonded by welding. The energy absorbing layer 8 and at least a boundary layer of the filaments 9 is melted to obtain a strong bond not only between the energy absorbing layer 8 and the filaments 9 but also the filaments 9 arranged next to each other. A plurality of filaments 9 can be deposited on the base element 2 in a stacked configuration.

The filament supply unit 4 can according to any one of the embodiments comprise a nozzle element. The filament 9 leaves the filament supply unit 4 through an opening in the nozzle element. The opening of the nozzle element is during operation advantageously arranged in a distance to the base element 2. According to an embodiment, the distance between the opening of the nozzle element and the base element 2 corresponds to not more than the thickness of the filament 9. The distance can be in particular measured as a normal distance with respect to the base element 2. According to an embodiment, the distance between the opening of the nozzle element and the base element is less than the thickness of the filament 9. In this case, the filament 9 can be pressed against the surface of the base element 2. Thereby the filament 9 can be flattened. The contact surface between the filament 9 and the base element 2 can thereby be increased.

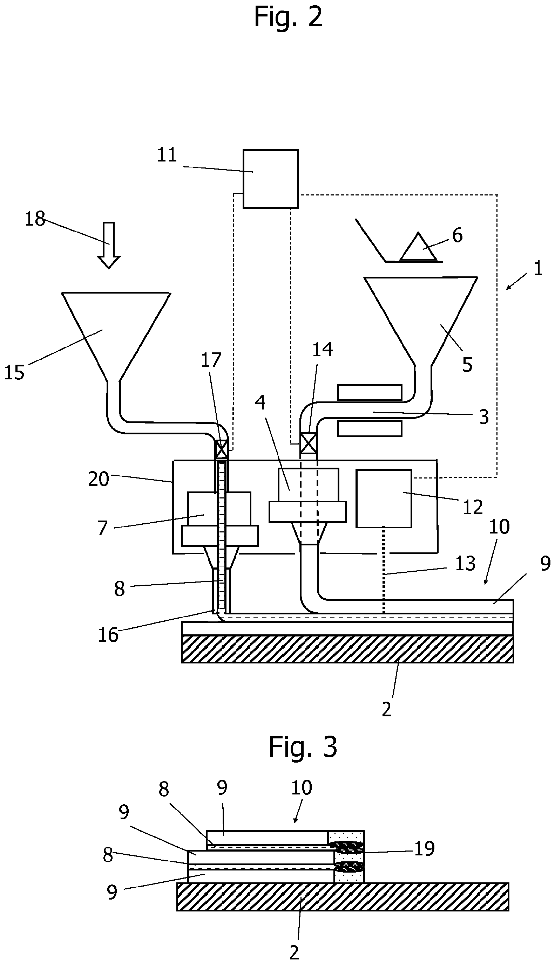

Fig. 2 shows an additive manufacturing device 1, comprising a base element 2, a filament generation unit 3 for generating a filament 9, a filament supply unit 4 for supply of the filament 9, a raw material container 5 containing a raw material 6 to be supplied to the filament generation unit 3. The raw material container 5 can be a hopper. The hopper is disposed with a discharge conduit, which leads to the filament generation unit 3, which can be configured as an extruder. The extruder can comprise a screw for conveying the raw material through an extruder conduit. The raw material 6 can be supplied to the hopper as polymer pellets, thus as a solid. The raw material is can be heated in the extruder so as to form a polymer melt. The extruder screw is used to process the polymer and to supply or distribute energy to the polymer for promoting the filament generation process, e.g. by transforming the polymer into a flowable polymer. In particular, shearing forces may be introduced into the polymer whereby thermal energy can be added to the polymer. The polymer can be melted to obtain a flowable polymer. The extruder can be provided with a heat exchanger either to heat or to cool the extruder conduit to process the polymer pellets and to transform them into a flowable polymer.

According to an embodiment, the filament 9 may be supplied already as a strand to the filament supply unit 4. In this case, the manufacturing of the strand can be performed in an upstream unit and the strand may be used as a raw material for the filament supply unit 4. For this reason, the raw material container 5 containing a raw material 6 and the filament generation unit 3 may be omitted in a further embodiment not shown in the drawings. The filament supply unit 4 according to any of the embodiments can be provided with a heating element. The filament 9 can be heated to be deposited as a flowable filament 9 on the base element 9 or another filament strand 9 already present on the base element 2.

The flowable polymer can be fed into the filament supply unit 4 to generate the filament 9. The supply of the flowable polymer to the filament supply unit 4 can be interrupted by a closing element 14, such as a valve. The filament generation unit 3 is thus configured to transform the raw material 6 into the filament 9, whereby the filament 9 is deposited by the filament supply unit 4 on the base element 2.

An energy absorbing layer supply unit 7 is configured to supply an energy absorbing layer 8 on the filament 9. An energy absorbing raw material 18 can be supplied to an energy absorbing material unit 15. The energy absorbing material unit 15 can be configured to transform the energy absorbing raw material 18 into an energy absorbing material 8. The energy absorbing material 8 is supplied to the energy absorbing layer supply unit 7. A closing element 17 can be arranged upstream of the energy absorbing layer supply unit 7. The closing element 17 can be controlled by the control unit 11. The energy absorbing layer supply unit 7 is configured to supply the energy absorbing layer 8, such that the energy absorbing layer 8 covers at least a portion of the filament 9. An applicator element 16 can be provided for applying the energy absorbing layer 8 on the filament 9. The applicator element 16 can be configured as a spray nozzle in case the energy absorbing layer 8 is in a liquid state. The applicator element 16 can comprise a roller element, if the energy absorbing layer 8 is either applied in a liquid state, e.g. as liquid film or in a flowable state, such as a gel or a slurry. The applicator element can comprise a dispenser, if the energy absorbing layer 8 is applied in a solid state, such as a foil or a powder.

An energy beam 13 can be directed onto the energy absorbing layer 8 to heat the energy absorbing layer 8, such that the energy absorbing layer 8 and the filaments 9 are bonded. The filament 9 can comprise an energy transmissive material. The energy beam 13 passes through the filament 9 before reaching the energy absorbing layer 8. The filament 9 can have a lower absorption coefficient for the energy beam 13 than the energy absorbing layer 8. The energy beam 13 can be generated in an energy beam generation unit 12. The energy beam generation unit 12 can comprise an energy beam directing unit for directing the energy beam on the surface of the energy absorbing layer 8.

The filament 9 and/or the energy absorbing layer 8 can comprise a polymer. The energy absorbing layer 8 can comprise an energy absorbing ink. The energy absorbing layer can in particular be a light absorbing layer 8. The energy absorbing ink can in particular be a light absorbing ink.

The energy absorbing layer 8 is according to the embodiment shown in Fig. 2 sandwiched between two filaments 9. In particular, a plurality of filaments 9 can be stacked upon each other. At least some of the filaments 9 of the stack can be separated from each other by the energy absorbing layer 8. In particular, each of the filaments 9 of the stack can be separated from each other by the energy absorbing layer 8.

The energy beam 13 can be a laser beam. The bonding between the filaments 9 can be obtained by laser-welding by the laser beam.

The device can comprise a print head 20 comprising the filament supply unit 4, the energy absorbing layer supply unit 7 and the energy beam generation unit 12. The print head 20 can be movable as a unit. The filament 9 and the energy absorbing layer 8 can be supplied to the respective filament supply unit 4 and the energy absorbing layer supply unit 7 by means of a flexible conduit, such as a flexible hose.

The device can further comprise a control unit 11. The control unit 11 comprises or is connected to a processing unit for obtaining a pathway for depositing the filament 9 on the base element 2 such that the moving filament supply unit 4, the energy absorbing layer supply unit 7 and the energy beam generation unit 12 are movable according to the defined pathway.

The closing element 14 and the closing element 17 may be electrically connected to the control unit. By manipulation of the closing elements 14, 17, the supply of filament 9 and/or the energy absorbing layer 8 can be interrupted. The energy beam generation unit 12 can be electrically connected to the control unit 11. The energy beam generation unit 12 can be switched off by the control unit 11. The energy beam directing unit can be directed by the control unit 11 in such a way that the energy beam 13 is directed on the surface of the energy absorbing layer 8.

Fig. 3 shows a detail of the solid article 10 manufactured by a device 1 according any of the previous embodiments. A portion of the solid article 10 is shown in a section. This example of a solid article 10 is composed of three filaments 9 arranged in a stack. An energy absorbing layer 8 is disposed between two neighboring filaments 9. On the right-hand side of fig. 3, the filaments 9 and the energy absorbing layers 8 are shown in section. The sectional view reveals the welding spots 19 by which the bond between the filaments 9 and the energy absorbing layers 8 is provided.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of an element or compound selected from the group consisting of A, B, C .... and N, the text should be interpreted as requiring only one element from the group, not A plus N, or B plus N, etc.

## Claims

1. A method for manufacturing a solid article (10) by an additive manufacturing device (1), the method comprising a first step of depositing a filament (9) on a base element (2), whereby in a second step the filament (9) is at least partially covered by an energy absorbing layer (8), whereby in a third step the energy absorbing layer (8) is at least partially covered by another layer of the filament (9), such that the energy absorbing layer (8) is sandwiched between the filaments (9), whereby in a fourth step an energy beam (13) is directed onto the energy absorbing layer (8) to provide a bond of the filaments (9) and the energy absorbing layer (8).

2. The method of claim 1, whereby the energy absorbing layer (8) is melted when in contact with the energy beam (13).

3. The method of one of claims 1 or 2, whereby a pathway for depositing the filament (9) on the base element (2) is determined according to a computer-generated model of the solid article (10) by a control unit (11).

4. The method of one of the preceding claims, whereby the filaments (9) and the energy absorbing layer (8) are bonded by welding.

5. The method of one of the preceding claims, whereby a plurality of filaments (9) are deposited on the base element (2) in a stacked configuration.

6. The method according to claim 1, whereby the filament (9) comprises a light transmissive material.

7. The method according to claim 6, whereby the filament (9) comprises a polymer.

8. An additive manufacturing device (1), comprising a base element (2), a filament generation unit (3) for generating a filament (9), a filament supply unit (4) for supply of the filament (9), a raw material container (5) containing a raw material (6) to be supplied to the filament generation unit (3), an energy absorbing layer supply unit (7) configured to supply an energy absorbing layer (8) on the filament (9), whereby the filament generation unit (3) is configured to transform the raw material (6) into the filament (9), whereby the filament supply unit (4) is configured to deposit the filament (9) on the base element (2), **characterized in that** the energy absorbing layer supply unit (7) is configured to supply the energy absorbing layer (8) on the deposited filament (9), such that the energy absorbing layer (8) covers at least a portion of the filament (9), whereby an energy beam (13) is directed onto the energy absorbing layer (8) to heat the energy absorbing layer (8), such that the energy absorbing layer (8) and the filaments (9) are bonded.

9. The device according to claim 8, whereby the energy absorbing layer (8) is sandwiched between two filaments (9).

10. The device according to one of claims 8 or 9, whereby an applicator element (16) is provided for applying the energy absorbing layer (8) on the filament (9).

11. The device according to one of claims 8 to 10, whereby the bonding between the filaments (9) is obtained by a laser beam for obtaining a bonding by laser-welding.

12. The device according to one of claims 8 to 11, whereby the device comprises a print head (20) comprising the filament supply unit (4), the energy absorbing layer supply unit (7) and the energy beam generation unit (12).

13. The device according to one of claims 8 to 12 further comprising a control unit (11).

14. The device according to claim 13, whereby the control unit (11) comprises or is connected to a processing unit for obtaining a pathway for depositing the filament (9) on the base element (2) such that the moving filament supply unit (4), the energy absorbing layer supply unit (7) and the energy beam generation unit (12) are movable according to the defined pathway.

15. Use of the additive manufacturing device according to any of the preceding claims 8 to 14 for manufacturing a solid article.

## Patentansprüche

1. Verfahren zur Herstellung eines festen Gegenstands (10) durch eine additive Fertigungsvorrichtung (1), wobei das Verfahren einen ersten Schritt des Abscheidens eines Filaments (9) auf einem Basiselement (2) umfasst, wobei in einem zweiten Schritt das Filament (9) zumindest teilweise von einer energieabsorbierenden Schicht (8) bedeckt ist, wobei in einem dritten Schritt die energieabsorbierende Schicht (8) zumindest teilweise von einer anderen Schicht des Filaments (9) bedeckt ist, sodass die energieabsorbierende Schicht (8) zwischen den Filamenten (9) angeordnet ist, wobei in einem vierten Schritt ein Energiestrahl (13) auf die Energieabsorptionsschicht (8) gerichtet wird, um eine Bindung der Filamente (9) und der Energieabsorptionsschicht (8) herzustellen.

2. Das Verfahren nach Anspruch 1, wobei die energieabsorbierende Schicht (8) geschmolzen wird, wenn sie mit dem Energiestrahl (13) in Kontakt steht.

3. Das Verfahren nach einem der Ansprüche 1 oder 2, wobei ein Weg zum Abscheiden des Filaments (9) auf dem Basiselement (2) gemäß einem computergenerierten Modell des festen Gegenstands (10) von einer Steuereinheit (11) bestimmt wird.

4. Das Verfahren nach einem der vorhergehenden Ansprüche, wobei die Filamente (9) und die energieabsorbierende Schicht (8) durch Schweißen verbunden werden.

5. Das Verfahren nach einem der vorhergehenden Ansprüche, wobei mehrere Filamente (9) in einer gestapelten Konfiguration auf dem Basiselement (2) abgeschieden werden.

6. Das Verfahren nach Anspruch 1, wobei das Filament (9) ein lichtdurchlässiges Material umfasst.

7. Das Verfahren nach Anspruch 6, wobei das Filament (9) ein Polymer umfasst.

8. Additive Fertigungsvorrichtung (1), umfassend ein Basiselement (2), eine Filamenterzeugungseinheit (3) zum Erzeugen eines Filaments (9), eine Filamentversorgungseinheit (4) zum Zuführen des Filaments (9), einen Rohmaterialbehälter (5), der ein Rohmaterial (6) zur Zuführung zu der Filamenterzeugungseinheit (3) enthält, eine energieabsorbierende Schichtversorgungseinheit (7), die geeignet ist, um eine energieabsorbierende Schicht (8) auf dem Filament (9) zuzuführen, wobei die Filamenterzeugungseinheit (3) geeignet ist, um das Rohmaterial (6) in das Filament (9) umzuwandeln, wobei die Filamentversorgungseinheit (4) geeignet ist, um das Filament (9) auf dem Basiselement (2) abzuscheiden, **dadurch gekennzeichnet, dass** die energieabsorbierende Schichtversorgungseinheit (7) derart eingerichtet ist, dass sie die energieabsorbierende Schicht (8) auf dem abgeschiedenen Filament (9) zuführt, sodass die energieabsorbierende Schicht (8) mindestens einen Teil des Filaments (9) bedeckt, wobei ein Energiestrahl (13) auf die energieabsorbierende Schicht (8) gerichtet wird, um die energieabsorbierende Schicht (8) zu erwärmen, sodass die energieabsorbierende Schicht (8) und die Filamente (9) miteinander verbunden werden.

9. Die Vorrichtung nach Anspruch 8, wobei die energieabsorbierende Schicht (8) zwischen zwei Filamenten (9) angeordnet ist.

10. Die Vorrichtung nach einem der Ansprüche 8 oder 9, wobei ein Applikatorelement (16) zum Aufbringen der energieabsorbierenden Schicht (8) auf das Filament (9) vorgesehen ist.

11. Die Vorrichtung nach einem der Ansprüche 8 bis 10, wobei der Verbund zwischen den Filamenten (9) durch einen Laserstrahl erhalten wird, um einen Verbund durch Laserschweißen zu erhalten.

12. Die Vorrichtung nach einem der Ansprüche 8 bis 11, wobei die Vorrichtung einen Druckkopf (20) umfasst, der die Filamentversorgungseinheit (4), die energieabsorbierende Schichtversorgungseinheit (7) und die Energiestrahlerzeugungseinheit (12) umfasst.

13. Die Vorrichtung nach einem der Ansprüche 8 bis 12, ferner umfassend eine Steuereinheit (11).

14. Die Vorrichtung nach Anspruch 13, wobei die Steuereinheit (11) eine Verarbeitungseinheit umfasst oder mit dieser verbunden ist, um einen Weg zum Ablegen des Filaments (9) auf dem Basiselement (2) zu ermitteln, sodass die bewegliche Filamentversorgungseinheit (4), die energieabsorbierende Schichtversorgungseinheit (7) und die Energiestrahlerzeugungseinheit (12) gemäß dem definierten Weg bewegbar sind.

15. Verwendung der additiven Fertigungsvorrichtung gemäß einem der vorhergehenden Ansprüche 8 bis 14 zur Herstellung eines festen Gegenstands.

## Revendications

1. Procédé de fabrication d'un article solide (10) par un dispositif de fabrication additive (1), ledit procédé comprenant une première étape de dépôt d'un filament (9) sur un élément de base (2), en ce que dans une seconde étape le filament (9) est au moins partiellement recouverte par une couche d'absorption d'énergie (8), en ce que dans une troisième étape, la couche d'absorption d'énergie (8) est au moins partiellement recouverte par une autre couche du filament (9), de sorte que la couche d'absorption d'énergie (8) est pris en sandwich entre les filaments (9), en ce que dans une quatrième étape, un faisceau d'énergie (13) est dirigé sur la couche d'absorption d'énergie (8) pour assurer une liaison des filaments (9) et de la couche d'absorption d'énergie (8).

2. Le procédé selon la revendication 1, dans lequel la couche d'absorption d'énergie (8) est fondue lorsqu'elle est en contact avec le faisceau d'énergie (13).

3. Le procédé selon l'une des revendications 1 ou 2, dans lequel une voie de dépôt du filament (9) sur l'élément de base (2) est déterminée selon un modèle de l'article solide (10) généré par ordinateur par une unité de commande (11).

4. Le procédé selon l'une des revendications précédentes, dans lequel les filaments (9) et la couche d'absorption d'énergie (8) sont liés par soudage.

5. Le procédé selon l'une des revendications précédentes, dans lequel une pluralité de filaments (9) sont déposés sur l'élément de base (2) dans une configuration empilée.

6. Le procédé selon la revendication 1, dans lequel le filament (9) comprend un matériau transmettant la lumière.

7. Le procédé selon la revendication 6, dans lequel le filament (9) comprend un polymère.

8. Dispositif de fabrication additive (1), comprenant un élément de base (2), une unité de génération de filament (3) pour générer un filament (9), une unité d'alimentation en filament (4) pour l'alimentation du filament (9), un récipient de matière première (5) contenant une matière première (6) à fournir à l'unité de génération de filament (3), une unité d'alimentation en couche d'absorption d'énergie (7) configurée pour fournir une couche d'absorption d'énergie (8) sur le filament (9), dans lequel l'unité de génération de filament (3) est configurée pour transformer la matière première (6) en filament (9), en ce que l'unité d'alimentation en filament (4) est configurée pour déposer le filament (9) sur l'élément de base (2), **caractérisé en ce que** l'unité d'alimentation en couche d'absorption d'énergie (7) est configurée pour fournir la couche d'absorption d'énergie (8) sur le filament déposé (9), de sorte que la couche d'absorption d'énergie (8) recouvre au moins une partie du filament (9), **en ce qu'** un faisceau d'énergie (13) est dirigé sur la couche d'absorption d'énergie (8) pour chauffer la couche d'absorption d'énergie (8), de telle sorte que la couche d'absorption d'énergie (8) et les filaments (9) sont liés.

9. Le dispositif selon la revendication 8, dans lequel la couche d'absorption d'énergie (8) est prise en sandwich entre deux filaments (9).

10. Le dispositif selon l'une des revendications 8 ou 9, dans lequel un élément d'application (16) est prévu pour appliquer la couche d'absorption d'énergie (8) sur le filament (9).

11. Le dispositif selon l'une des revendications 8 à 10, dans lequel le collage entre les filaments (9) est obtenu par un faisceau laser pour obtenir un collage par soudage laser.

12. Le dispositif selon l'une des revendications 8 à 11, en ce que le dispositif comprend une tête d'impression (20) comprenant l'unité d'alimentation en filament (4), l'unité d'alimentation en couche d'absorption d'énergie (7) et l'unité de génération de faisceau d'énergie (12).

13. Le dispositif selon l'une des revendications 8 à 12 comprenant en outre une unité de commande (11).

14. Le dispositif selon la revendication 13, dans lequel l'unité de commande (11) comprend ou est reliée à une unité de traitement pour obtenir une voie de dépôt du filament (9) sur l'élément de base (2) de telle sorte que l'unité d'alimentation en filament est mobile (4), l'unité d'alimentation de couche d'absorption d'énergie (7) et l'unité de génération de faisceau d'énergie (12) sont mobiles selon la voie défini.

15. Utilisation du dispositif de fabrication additive selon l'une quelconque des revendications 8 à 14 précédentes pour fabriquer un article solide.
